# EUROPEAN PATENT APPLICATION

(11) **EP 3 267 333 A1**
(43) Date of publication of application: **10.01.2018**
(21) Application number: 17178027.3
(22) Date of filing: 27.06.2017
(51) Int. Cl.: G06F 17/30

(54) **LOCAL PROCESSING OF BIOMETRIC DATA FOR A CONTENT SELECTION SYSTEM**

(30) Priority: 05.07.2016 US 201662358399 P; 28.03.2017 US 201715471695
(71) Applicant: Cynny SpA, 50129 Firenze (IT)
(72) Inventor: Bargagni, Stefano, Palo Alto, CA California 94304 (US); Tassone, Daniele, Palo Alto, CA California 94304 (US)
(74) Representative: Botti, Mario

(57) **Abstract**

A data processing method implemented on a computing device, the method including: capturing, using a camera, an image during playback of recommendation determination content, where the recommendation determination content is used by the computing device to present customized content in response to the recommendation determination content; determining, based on the image that was captured, biometric information of a subject in the captured image; determining an object category of the recommendation determination content played on the computing device; storing, locally on the computing device, a profile associating the biometric information and the object category of the recommendation determination content, based on using the biometric information to identify the profile from another profile stored on the computing device; determining, based on the profile stored on the computing device, a predetermined content access category, where the predetermined content access category represents a type of content that may be of interest when played at the computing device; causing, based on the predetermined content access category and without the biometric information that was used to generate the predetermined content access category, selection of customized content for display on the computing device.

## Description

### TECHNICAL FIELD

The present disclosure generally is in the technical field of computer programs, computer-implemented systems and techniques for processing of biometric data and, more specifically, processing of biometric data locally.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Content recommendation systems can select highly relevant content to present to users. These content recommendation systems may use information collected about the users to select the relevant content. However, there may be highly valuable types of information which, while would increase the relevance of selected content, would pose a problem if misused because of privacy or other reasons. Therefore, there is a need for a technical process that provides highly relevant selected content yet addresses privacy and various other concerns.

### SUMMARY OF THE INVENTION

The appended claims may serve as a summary of the invention.

### BRIEF DESCRIPTION OF THE DRAWINGS

The embodiments are illustrated by way of example and not limitation in the figures of the accompanying drawings in which like references indicate similar elements.
FIG. 1 shows a local content selection system configured to select customized content for display.
FIG. 2 illustrates a data processing system that may be used for the local content selection system, according to one embodiment.

### DETAILED DESCRIPTION

The following description and drawings are illustrative and are not to be construed as limiting. Numerous specific details are described to provide a thorough understanding. However, in certain instances, well known or conventional details are not described in order to avoid obscuring the description. References to one or an embodiment in the present disclosure are not necessarily references to the same embodiment; and, such references mean at least one.

Headings used in this application are provided merely for reference purposes. Features discussed following each heading do not limit the features as being required by a specific embodiment identified by each heading and do not limit the features as solely belonging to any specific embodiment identified by each heading.

### 1. GENERAL OVERVIEW

Content recommendation systems are configured to suggest to end-users content that they may like. The content recommendation systems may use various sources of information to make suggestions. Some examples include analyzed preference information, such as age, gender, or other pieces of information.

In an embodiment, a computing device may use biometric information, such as age, gender, facial features, or other biometric information to improve content recommendations. The biometric information may be used in conjunction with the analyzed preference information to determine recommended content. The analyzed preference information and biometric information used for the recommendation system are traditionally sent to a server for analysis. However, this may result in possible privacy concerns, such as the selling of the end-user data to third-parties, the risk of security breach involving a remote server that stores the analyzed preference information and biometric information, and privacy violations associated with the misuse of the end-user data. The computing device may include a local content selection system that addresses these concerns. The local content selection system protects user privacy, while providing powerful content recommendation features using various sources of information, including those that may be sensitive information.

In an embodiment, a data processing method implemented on a local computing device includes capturing, using a camera, an image during playback of recommendation determination content. For example, the camera may be a component included with the local computing device. The recommendation determination content may be used by the local computing device to select customized content in response to the recommendation determination content. The method includes determining, based on the captured image, biometric information of a subject within the captured image and an object category of the recommendation determination content played on the local computing device. The method includes storing, locally on the local computing device, a profile associating the biometric information and the object category of the recommendation determination content. For example, the biometric information may be used to identify the profile from another profile stored at the local computing device.

In various embodiments, the biometric information may also include determining that the subject within the captured image is expressing a facial emotion and storing in the profile an association between the facial emotion and the object category. The biometric information of the subject may be used to differentiate the subject within the captured image from another profile on the local computing device.

The method includes determining, based on the profile at the local computing device, a predetermined content access category. The predetermined content access category may represent a type of content that may be of interest when played at the local computing device. For example, the predetermined content access category may be based at least in part on a user preference, age, or gender. The method includes causing, based on the predetermined content access category and without the biometric information used to generate the predetermined content access category, selection of customized content for display on the local computing device. The selected customized content may be displayed at the local computing device.

In various embodiments, the local computing device includes maintaining a repository list to provide content for display on the local computing device. The local computing device may select a repository to provide content for display and request from the repository the selected content. The selected repository may provide content in response to the request by the local computing device, without storing an indication at the selected repository that the customized content was provided. The predetermined content access category may be mapped in the repository list as corresponding to the selected repository.

Embodiments of the method may include capturing the image during playback of recommendation determination content occurring before causing selection of customized content. Determining the object category for the recommendation determination content may include retrieving metadata associated with the recommendation determination content and determining, based on the retrieved metadata, the object category.

The method may include determining, based on behavioral information, whether the subject expressed a positive indication towards the object category and storing in the profile an association between the positive indication and the object category.

Embodiments may include presenting, on the local computing device, information from the stored profile and, after receiving an indication on the local computing device, removing the profile from the local computing device.

### 2. COMPUTER SYSTEMS

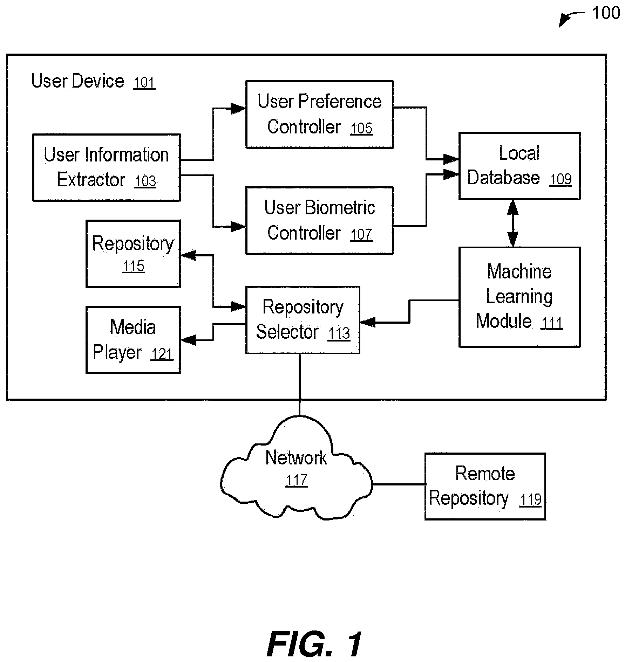

FIG. 1 is a block diagram of computer systems that may be used in an embodiment.

In the example of FIG. 1, computer systems 100 include a user device 101 and a remote repository 119, communicatively coupled over a network 117. The user device 101 may include a local content selection system executing on any suitable computing device that allows processing of information used to select content. For example, the user device 101 may represent a mobile computing device or desktop computer.

The local content selection system includes a programmatic method to profile a user directly on the user device 101 and store locally in a local database 109 on the user device 101 private or sensitive data in a way that would be impossible to obtain by others.

The local content selection system uses a machine learning module 111 to process and determine private and biometric information to generate a profile of the user. The profile is stored on the user device 101 at the local database 109 and works locally on the user device 101 to determine which contents on a remote repository 119 over a network 117 to access.

The local content selection system protects user privacy by storing on the user device 101 the sensitive data (e.g., user preferences, age, gender, or other data) and computing locally the affinity between the user and various contents using a machine learning module 111. This does not require sending sensitive data over the network 117 to a remote server, such as to the remote repository 119.

Embodiments of the local content selection system may use different techniques to determine an affinity of a user to particular content. For example, the local content selection system may use facial recognition and data prediction techniques based on Support Vector Machine (SVM), to determine content suitable for the user. Since private data is stored and analyzed on the local device and never sent to a remote server, the privacy of the user is protected.

User data is analyzed by a machine learning module 111 that is running locally on the user device 101. Since the machine learning module 111 is able to analyze the user data without sending the information to a remote server, the local content selection system may protect the privacy of the user and provide customized content recommendation at the same time.

In FIG. 1, the user device 101 has a user information extractor 103 to obtain private data related to the user of the user device 101. For example, the user information extractor 103 runs on the user device 101 locally to recognize the user information by analyzing facial emotions, gender, age, or user behavior (e.g., likes for content), mouse movements, user location (e.g., global positioning system location information), time (e.g., hours, minutes, seconds, or other units of time), or other information.
The user information extractor 103 may provide information used to determine the user's affinity to content. For example, the user information extractor 103 detects the facial emotions of the user in response to contents presented on the user device so that the user preference controller 105 may infer the contents liked by the user and disliked by the user. As another example, the user information extractor 103 detects user interactions with the presented contents so that the machine learning module 111 may infer the affinity of the user to different types of contents.

In FIG. 1, a user preference controller 105 structures the data from the user information extractor 103 and stores them into a local database 109. A user biometric controller 107 identifies the current user (e.g., from among a plurality of users of the user device 101) and then binds the corresponding user information (e.g., emotions, gender, age, responses, or other information) to an identifier of this user. Thus, behaviors of different users of the user device 101 may be separately tracked, even when more than one user shares the same user device 101 and/or a same account. Thus, multiple users of the same user device 101 may be accurate profiled.

In FIG. 1, the local database 109 stores the data from the user preference controller 105 and the user biometric controller 107.

The local content selection system includes the machine learning module 111 configured to analyze information stored in the local database 109. The information is used to create a user profile that may be used to choose the right content to be presented to the current user of the user device 101. The machine learning module 111 is configured to learn how to make prediction of content (category) based on the user attributes. This may be combined with other information to determine content that the user may interested in.

Different embodiments of the local content selection system may express the prediction or predetermined content access category by the machine learning module 111 in different ways. In an embodiment, the local content selection system expresses the machine learning prediction in the format of "age/gender/ObjectCategory". For example, if the prediction is "24/female/clothing", the prediction from the machine learning module 111 causes the repository selector 113 to select a repository from the repository list (e.g., included inside the repository selector 113 that matches the predetermined content access category.

In FIG. 1, the user device has a local copy of a repository 115. As an example for this particular use scenario, the repository 115 includes content about "clothing". The remote repository 119 is configured to strictly respect the prediction pattern age/gender/objectCategory in serving content.

In an embodiment, since the machine learning module 111 maps the user preferences and biometric information to a predetermined content access category, the privacy of the user is protected. The repository 115 uses the predetermined content access category to serve a one-time request for content and does not track content access history at the local user device. Thus, the privacy protection of the user is improved.

After content (e.g., a video, an advertisement, or an article) is retrieved, a media player 121 presents the content.

### 3. EXAMPLE USE SCENARIO

The following is an example use scenario of how the local content selection system, in an embodiment, may operate. The example is meant to be illustrative and not exclusive of the kind of suggestions that may be provided by the local content selection system. References made in the use scenario following include numbers corresponding to reference numbers used in FIG. 1.

The local content selection system includes the user information extractor 103 extracting user data from a user image captured by a camera configured on the user device 101 (e.g., a smartphone, tablet, or personal computer). The user information extractor 103 extracts information such as age, gender, facials expression (emotions), and assigns an identifier to the identified user (e.g., using face morphology). The image is processed locally on the user device 101 and the extracted information is stored locally on the user device 101. Facial expressions or facial emotions may be determined using various techniques. As an example, SVM, Cascade Classifier, or other techniques may be compatible with the local content selection system.

The user preference controller 105 and the user biometric controller 107 incorporate information from each respective component to bind the information with the content that the user was watching at that moment. For example, if the user was watching a boat and was smiling, then the user preference controller 105 and the user biometric controller 107 may bind the emotions (smile) on this object (boat) for this user.

To determine which object is described in the recommendation determination content when the image is captured, the user information extractor 103 may analyze metadata included with the image. The metadata may be provided by a content creator for the recommendation determination content.

The information extracted is then structured by the user preference controller 105 and stored into the local database 109. For example, the stored data may be represented as a row of data with elements as determined by the local content selection system (e.g., userId, objectWatched, emotionsAssociated, timestamp). In an embodiment, the local database 109 may be implemented via HTML5 local storage. Over a period of time, the local database 109 has locally the user information that may be processed by the machine learning module 111.

The local content selection system may include the machine learning module 111 that takes input from the user and provides content that may be of interest to the user. The machine learning module 111 may be running locally on the user device 101 and communicates directly with the local database 109 in order to make a prediction of what the user may want to view. The machine learning module 111 does not share the information from the local database 109 over the network in order to assure that sensitive data is always confined locally.

In an embodiment, the machine learning module 111 output is represented as age/gender/objectCategory. For example, the output may include "24/female/boat". The repository selector 113 analyzes the data provided by the machine learning module 111 and predicts which repository (from the repository list) is matching this pattern. The repository is queried, the proper content is fetched and downloaded and played in the media player 121. The repository may include third-party repositories. For example, a third-party repository may be included inside the repository list if they respect the output from the machine learning module (e.g., in a RESTful architecture).

To make the prediction, the machine learning module 111 analyzes the user preference (e.g., the user likes the boat) and biometric data (e.g., age, gender, emotions) and then gives an answer through machine learning prediction which takes this information and then compares them with a pre-trained model. The prediction may be made using any machine learning techniques (e.g., SVM, Random Forest) but the prediction is not limited to a particular methodology. For example, a Deep Learning technique, or any other computation algorithm able to make a prediction may be used.

Since the entire user data set (e.g., user preference, emotions, age, gender, and other) are stored locally, such as with HTML5 local storage, there are no privacy violation for the end-user. The personal and sensitive data of the user are, in this way, under the exclusively control of the user. A data manager may be provided as a user interface to allow the user to manage, delete, change the personal data stored in the local database 109. The user is the only person allowed to have the access to the data in the local database 109.

The local content selection system may access to a server to obtain, from specials repositories, contents matching the user profile. For example, a repository about nautical sailing objects may be queried when the user has expressed positive emotions when viewing a sailing boat. However, the local content selection system does not need to upload or provide biometric information to the server, such as information stored as a cookie accessible to the local content selection system, but only draws from the repository containing selected content categories of objects.

Once content has been played, it may be deleted from the device.

In an embodiment, where the user device 101 does not have any internet access, the user may also take benefit from the solution since all the data are processed locally. Some examples of local user devices without internet access may include SmartTVs, set-top boxes that are usually not connected to the internet.

### 4. ALTERNATE EMBODIMENTS

Alternate embodiments of the local content selection system may include using additional sources of data when determining what content to present to users. For example, the use of biometric data may be supplemented by any of the following sources of data:
Location data provided by global positioning system (GPS) unit, Bluetooth, or cellular tower information of the local device;
Audio data captured using a microphone of the local device;
Axis and tilt data captured using a gyroscope of the local device;
Scene detection data captured using a camera, light sensor, or other sensor of the local device;
Other biometrical sensors included either on the local computing device or communicatively coupled to the local computing device;
Glasses;
Browser history data from a browser of the local device;
Cookie data from a browser of the local device;
Social network preferences provided by an application of the local device;
Or any of these sources of data in combination.

These additional sources of information add additional data to the local content selection system to infer what a user may enjoy watching. Some of these additional sources of information may be personal or sensitive information from a user of the local device 101, similar to the biometric data as described elsewhere in this application.

All or some of the privacy protection features as described elsewhere in this application may be enforced for these additional sources of data. For example, location data may be collected by the local content system when predicting what a user may enjoy watching at a particular moment. The location data may be used to infer what kind of environment the user is in, to determine what kind of content they would be best suited for. If the user is near the sea, content including boats may be more appealing to the user. If the user is instead near a mall, the user may be presented with content items associated with items sold at the mall. The local content selection system may make these determinations, without transmitting the specific data from these additional sources of information from the local device.

In an embodiment, the local content selection system may use a metadata determination model. The metadata determination model may determine what kind of metadata should be associated with any given image. For example, the user information extractor 103 may request from the metadata determination module metadata for a particular image or video a user is viewing. The metadata may be provided by a content creator for the recommendation determination content or through other methods, such as an "on the fly" analysis of the image or video. The analysis may be determined at a server and provided to the local user device or at the local user device when playing the image or video. In the embodiment where the metadata is determined at the local user device, the local user device may determine at the local user device the metadata information only when user preference information is desired. For example, if a video includes multiple image frames, only the image frame where user preference information is required will be analyzed to determine the corresponding metadata for the image frame. This allows the local content selection system to conserve computing resources such as memory and processing power, by selectively determining metadata information as necessary.

### 5. IMPLEMENTATION EXAMPLE - HARDWARE OVERVIEW

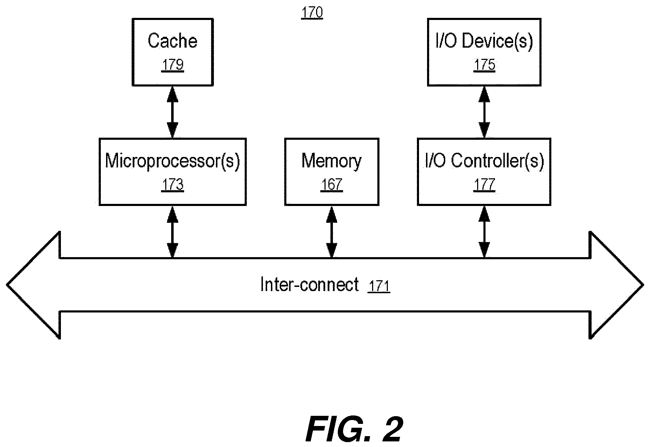

The user device 101 of FIG. 1 may be implemented using a data processing system of FIG. 2.

FIG. 2 illustrates a data processing system according to one embodiment. While FIG. 2 illustrates various components of a computer system, it is not intended to represent any particular architecture or manner of interconnecting the components. One embodiment may use other systems that have fewer or more components than those shown in FIG. 2.

In FIG. 2, the data processing system 170) includes an inter-connect 171 (e.g., bus and system core logic), which interconnects a microprocessor(s) 173 and memory 167. The microprocessor 173 is coupled to cache memory 179 in the example of FIG. 2.

In one embodiment, the inter-connect 171 interconnects the microprocessor(s) 173 and the memory 167 together and also interconnects them to input/output (I/O) device(s) 175 via I/O controller(s) 177. I/O devices 175 may include a display device and/or peripheral devices, such as mice, keyboards, modems, network interfaces, printers, scanners, video cameras and other devices known in the art. In one embodiment, when the data processing system is a server system, some of the I/O devices 175, such as printers, scanners, mice, and/or keyboards, are optional.

In one embodiment, the inter-connect 171 includes one or more buses connected to one another through various bridges, controllers and/or adapters. In one embodiment the I/O controllers 177 include a USB (Universal Serial Bus) adapter for controlling USB peripherals, and/or an IEEE-1394 bus adapter for controlling IEEE-1394 peripherals.

In one embodiment, the memory 167 includes one or more of: ROM (Read Only Memory), volatile RAM (Random Access Memory), and non-volatile memory, such as hard drive, flash memory, etc.

Volatile RAM is typically implemented as dynamic RAM (DRAM) which requires power continually in order to refresh or maintain the data in the memory. Non-volatile memory is typically a magnetic hard drive, a magnetic optical drive, an optical drive (e.g., a DVD RAM), or other type of memory system which maintains data even after power is removed from the system. The non-volatile memory may also be a random access memory.

The non-volatile memory can be a local device coupled directly to the rest of the components in the data processing system. A non-volatile memory that is remote from the system, such as a network storage device coupled to the data processing system through a network interface such as a modem or Ethernet interface, can also be used.

In this description, some functions and operations are described as being performed by or caused by software code to simplify description. However, such expressions are also used to specify that the functions result from execution of the code/instructions by a processor, such as a microprocessor.

Alternatively, or in combination, the functions and operations as described here can be implemented using special purpose circuitry, with or without software instructions, such as using Application-Specific Integrated Circuit (ASIC) or Field-Programmable Gate Array (FPGA). Embodiments can be implemented using hardwired circuitry without software instructions, or in combination with software instructions. Thus, the techniques are limited neither to any specific combination of hardware circuitry and software, nor to any particular source for the instructions executed by the data processing system.

While one embodiment can be implemented in fully functioning computers and computer systems, various embodiments are capable of being distributed as a computing product in a variety of forms and are capable of being applied regardless of the particular type of machine or computer-readable media used to actually effect the distribution.

At least some aspects disclosed can be embodied, at least in part, in software. That is, the techniques may be carried out in a computer system or other data processing system in response to its processor, such as a microprocessor, executing sequences of instructions contained in a memory, such as ROM, volatile RAM, non-volatile memory, cache or a remote storage device.

Routines executed to implement the embodiments may be implemented as part of an operating system or a specific application, component, program, object, module or sequence of instructions referred to as "computer programs." The computer programs typically include one or more instructions set at various times in various memory and storage devices in a computer, and that, when read and executed by one or more processors in a computer, cause the computer to perform operations necessary to execute elements involving the various aspects.

A machine readable medium can be used to store software and data which when executed by a data processing system causes the system to perform various methods. The executable software and data may be stored in various places including for example ROM, volatile RAM, non-volatile memory and/or cache. Portions of this software and/or data may be stored in any one of these storage devices. Further, the data and instructions can be obtained from centralized servers or peer to peer networks. Different portions of the data and instructions can be obtained from different centralized servers and/or peer to peer networks at different times and in different communication sessions or in a same communication session. The data and instructions can be obtained in entirety prior to the execution of the applications. Alternatively, portions of the data and instructions can be obtained dynamically, just in time, when needed for execution. Thus, it is not required that the data and instructions be on a machine readable medium in entirety at a particular instance of time.

Examples of computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., Compact Disk Read-Only Memory (CD ROMS), Digital Versatile Disks (DVDs), etc.), among others. The computer-readable media may store the instructions.

The instructions may also be embodied in digital and analog communication links for electrical, optical, acoustical or other forms of propagated signals, such as carrier waves, infrared signals, digital signals, etc. However, propagated signals, such as carrier waves, infrared signals, digital signals, etc. are not tangible machine readable medium and are not configured to store instructions.

In general, a machine readable medium includes any mechanism that provides (i.e., stores and/or transmits) information in a form accessible by a machine (e.g., a computer, network device, personal digital assistant, manufacturing tool, any device with a set of one or more processors, etc.).

In various embodiments, hardwired circuitry may be used in combination with software instructions to implement the techniques. Thus, the techniques are neither limited to any specific combination of hardware circuitry and software nor to any particular source for the instructions executed by the data processing system.

The description and drawings are illustrative and are not to be construed as limiting. Numerous specific details are described to provide a thorough understanding. However, in certain instances, well known or conventional details are not described in order to avoid obscuring the description. References to one or an embodiment in the present disclosure are not necessarily references to the same embodiment; and, such references mean at least one.

The use of headings herein is merely provided for ease of reference, and shall not be interpreted in any way to limit this disclosure or the following claims.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, and are not necessarily all referring to separate or alternative embodiments mutually exclusive of other embodiments. Moreover, various features are described which may be exhibited by one embodiment and not by others. Similarly, various requirements are described which may be requirements for one embodiment but not other embodiments. Unless excluded by explicit description and/or apparent incompatibility, any combination of various features described in this description is also included here.

The disclosures of the above discussed patent documents are hereby incorporated herein by reference.

In the foregoing specification, the disclosure has been described with reference to specific exemplary embodiments thereof. It will be evident that various modifications may be made thereto without departing from the broader spirit and scope as set forth in the following claims. The specification and drawings are, accordingly, to be regarded in an illustrative sense rather than a restrictive sense.

## Claims

1. A data processing method implemented on a computing device, the method comprising:
capturing, using a camera, an image during playback of recommendation determination content, wherein the recommendation determination content is used by the computing device to present customized content in response to the recommendation determination content;
determining, based on the image that was captured, biometric information of a subject in the captured image;
determining an object category of the recommendation determination content played on the computing device;
storing, locally on the computing device, a profile associating the biometric information and the object category of the recommendation determination content, based on using the biometric information to identify the profile from another profile stored on the computing device;
determining, based on the profile stored on the computing device, a predetermined content access category, wherein the predetermined content access category represents a type of content that may be of interest when played at the computing device;
causing, based on the predetermined content access category and without transmitting from the computing device the biometric information that was used to generate the predetermined content access category, selection of customized content for display on the computing device.

2. The method of claim 1, further comprising displaying the selected customized content at the computing device.

3. The method of claim 1, further comprising:
maintaining at the computing device a repository list to provide content for display on the computing device;
wherein causing selection of customized content comprises:
selecting, locally on the computing device, a repository of content for display;
the computing device requesting the selected repository to provide content for display on the computing device.

4. The method of claim 3, further comprising receiving content from the selected repository in response to the request by the computing device, without storing an indication at the selected repository that the customized content was provided.

5. The method of claim 3, further comprising the repository list mapping the predetermined content access category to the selected repository.

6. The method of claim 1, further comprising capturing the image during playback of recommendation determination content before causing selection of customized content.

7. The method of claim 1, further comprising determining the object category by retrieving metadata associated with the recommendation determination content;
determining, based on the retrieved metadata, the object category.

8. The method of claim 1, further comprising:
determining, based on the biometric information, whether the subject within the captured image is expressing a facial emotion;
storing in the profile an association between the facial emotion and the object category.

9. The method of claim 1, further comprising:
determining, based on behavioral information, whether the subject expressed a positive indication towards the object category;
storing in the profile an association between the positive indication and the object category.

10. The method of claim 1 wherein the predetermined content access category is based at least in part on a user preference, age, or gender.

11. The method of claim 1 wherein the biometric information of the subject is used to differentiate the subject within the captured image from another subject stored as a profile on the computing device.

12. The method of claim 1, wherein the camera comprises a camera included on the computing device.

13. The method of claim 1, further comprising:
presenting, on the computing device, information from the stored profile;
after receiving an indication on the computing device, removing the profile from the computing device.

14. A computing device comprising:
one or more processors;
a non-transitory computer-readable storage medium storing instructions which, when executed by the one or more processors, cause performing:
capturing, using a camera, an image during playback of recommendation determination content, wherein the recommendation determination content is used by the computing device to present customized content in response to the recommendation determination content;
determining, based on the image that was captured, biometric information of a subject in the captured image;
determining an object category of the recommendation determination content played on the computing device;
storing, locally on the computing device, a profile associating the biometric information and the object category of the recommendation determination content, based on using the biometric information to identify the profile from another profile stored on the computing device;
determining, based on the profile stored on the computing device, a predetermined content access category, wherein the predetermined content access category represents a type of content that may be of interest when played at the computing device;
causing, based on the predetermined content access category and without transmitting from the computing device the biometric information that was used to generate the predetermined content access category, selection of customized content for display on the computing device.
